# EUROPÄISCHE PATENTANMELDUNG

(11) **EP 2 444 865 A1**
(43) Veröffentlichungstag der Anmeldung: **25.04.2012**
(21) Anmeldenummer: 10188561.4
(22) Anmeldetag: 22.10.2010
(51) Int. Cl.: G05B 15/02, G05B 23/02

(54) **Einrichtung und Verfahren zur Reduzierung des Energieverbrauchs einer Maschine aus der Automatisierungstechnik**

(71) Anmelder: SIEMENS AKTIENGESELLSCHAFT, 80333 München (DE)
(72) Erfinder: Geschwill, Michael, 91486, Uehlfeld (DE); Grözinger, Andreas, 71272, Renningen (DE)

(57) **Zusammenfassung**

Die Erfindung betrifft eine Einrichtung zur Reduzierung des Energieverbrauchs einer Maschine (8) aus der der Automatisierungstechnik, wobei die Einrichtung (9) derart ausgebildet ist, dass eine Betriebsart (14a,14b) der Maschine (8) und eine zu der Betriebsart (14a,14b) zugehörige Betriebsfunktionalität (15a,15b,15c) der Maschine (8) von einem Bediener auswählbar sind, wobei die Einrichtung (9) derart ausgebildet ist, dass zu einer ausgewählten Betriebsfunktionalität (15a,15b,15c) zugehörige Parameter (P) eingebbar sind, wobei die Einrichtung (9) zur Ermittelung eines Energieverbrauchszustands (E) anhand der ausgewählten Betriebsfunktionalität (15a,15b,15c) und der Parameter (P) ausgebildet ist. Weiterhin betrifft die Erfindung ein diesbezügliches Verfahren. Die Erfindung ermöglicht den Energieverbrauch einer Maschine (8) aus der Automatisierungstechnik zu senken.

## Beschreibung

Einrichtung und Verfahren zur Reduzierung des Energieverbrauchs einer Maschine aus der Automatisierungstechnik

Die Erfindung betrifft eine Einrichtung und ein Verfahren zur Reduzierung des Energieverbrauchs einer Maschine aus der Automatisierungstechnik.

Maschinen aus der Automatisierungstechnik, wie z.B. Werkzeugmaschinen, Produktionsmaschinen und/oder Roboter, weisen im Allgemeinen einen sehr hohen Energieverbrauch auf. Insbesondere Werkzeugmaschinen weisen dabei einen sehr hohen Energieverbrauch auf.

Es ist Aufgabe der Erfindung, den Energieverbrauch einer Maschine aus der Automatisierungstechnik zu senken.

Diese Aufgabe wird gelöst durch eine Einrichtung zur Reduzierung des Energieverbrauchs einer Maschine aus der der Automatisierungstechnik, wobei die Einrichtung derart ausgebildet ist, dass eine Betriebsart der Maschine und eine zu der Betriebsart zugehörige Betriebsfunktionalität der Maschine von einem Bediener auswählbar sind, wobei die Einrichtung derart ausgebildet ist, dass zu einer ausgewählten Betriebsfunktionalität zugehörige Parameter eingebbar sind, wobei die Einrichtung zur Ermittelung eines Energieverbrauchszustands anhand der ausgewählten Betriebsfunktionalität und der Parameter ausgebildet ist.

Weiterhin wird diese Aufgabe gelöst durch ein Verfahren zur Reduzierung des Energieverbrauchs einer Maschine aus der Automatisierungstechnik mit folgenden Verfahrenschritten:
- Einlesen einer ausgewählten Betriebsart der Maschine und einer zu der ausgewählten Betriebsart der Maschine ausgewählten zugehörigen Betriebsfunktionalität der Maschine,
- Einlesen von zu der ausgewählten Betriebsfunktionalität zugehörigen eingegebenen Parametern,
- Ermittelung eines Energieverbrauchszustands anhand der ausgewählten Betriebsfunktionalität und der Parameter.

Vorteilhafte Ausbildungen der Erfindung ergeben sich aus den abhängigen Ansprüchen.

Vorteilhafte Ausbildungen des Verfahrens ergeben sich analog zu den vorteilhaften Ausbildungen der Einrichtung und umgekehrt.

Es erweist sich als vorteilhaft, wenn die Einrichtung zur Ansteuerung von Maschinenaktoren in Abhängigkeit des Energieverbrauchszustands der Maschine ausgebildet ist, da hierdurch eine kompakte Bauweise einer Maschine aus der Automatisierungstechnik ermöglicht wird.

Ferner erweist es sich als vorteilhaft, wenn die Einrichtung eine Projektierungsschnittstelle aufweist, die zur Festlegung der Ansteuerung der Maschinenaktoren in Abhängigkeit des Energieverbrauchszustands der Maschine ausgebildet ist. Hierdurch wird es z.B. einem Hersteller der Maschine ermöglicht, auf einfache Art und Weise festzulegen, welche Maschinenaktoren bei einem bestimmten Energieverbrauchszustand ein- oder ausgeschaltet werden sollen.

Die Maschine aus der Automatisierungstechnik kann dabei z.B. als Werkzeugmaschine, Produktionsmaschine und/oder als Roboter ausgebildet sein.

Weiterhin erweist sich ein Computerprogramm mit Programmcode zur Durchführung des erfindungsgemäßen Verfahrens, wenn das Computerprogramm auf einer Recheneinheit ausgeführt wird, als vorteilhaft.

Ein Ausführungsbeispiel der Erfindung ist in der Zeichnung dargestellt und wird im Folgenden näher erläutert. Dabei zeigen:
FIG 1 eine Maschine, welche die erfindungsgemäße Einrichtung aufweist,
FIG 2 ein Menübaum und
FIG 3 eine Eingabemaske.

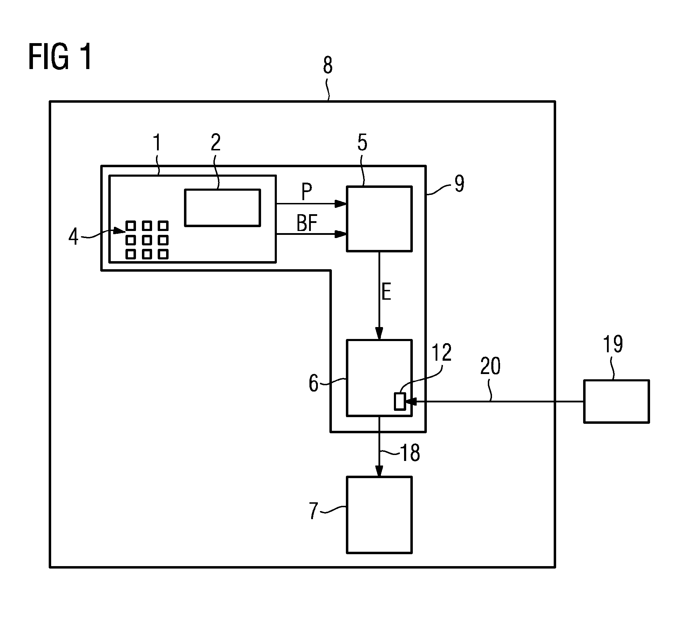

In FIG 1 ist in Form einer schematisierten blockförmigen Darstellung eine Maschine 8 aus der Automatisierungstechnik dargestellt, die eine erfindungsgemäße Einrichtung 9 zur Reduzierung des Energieverbrauchs einer Maschine aus der der Automatisierungstechnik aufweist. Die erfindungsgemäße Einrichtung 9 liegt dabei im Rahmen des Ausführungsbeispiels in Form einer CNC-Steuerung (Computer Numerical Control) vor, wobei der Übersichtlichkeit halber in FIG 1 nur die zum Verständnis der Erfindung wesentlichen Elemente der CNC-Steuerung dargestellt sind. Die erfindungsgemäße Einrichtung 9 weist im Rahmen des Ausführungsbeispiels eine Bedieneinheit 1, eine Auswerteeinheit 5 und eine Ansteuereinheit 6 auf. Die Auswerteeinheit 5 und die Ansteuereinheit 6 liegen dabei in im Rahmen des Ausführungsbeispiels in Form von ausführbarem Softwarecode vor, welcher auf einem oder mehreren Prozessoren ausgeführt wird. Die Ansteuereinheit 6 kann z.B. in Form einer SPS (Speicherprogramierbare Steuerung) vorliegen. Die Bedieneinheit 1, die Auswerteeinheit 5 und die Ansteuereinheit 6 können baulich in verschiedenen Komponenten der Maschine oder aber auch in einer einzelnen Komponente der Maschine realisiert sein.

Im Rahmen des Ausführungsbeispiels ist die Maschine 8 als Werkzeugmaschine ausgebildet.

Die Bedieneinheit 1 weist im Rahmen des Ausführungsbeispiels zur Bedienung der Maschine 8 Tasten 4 und einen Bildschirm 2 auf. Die Bedienung der Maschine 8 mittels der Bedieneinheit 1 erfolgt dabei menügeführt.

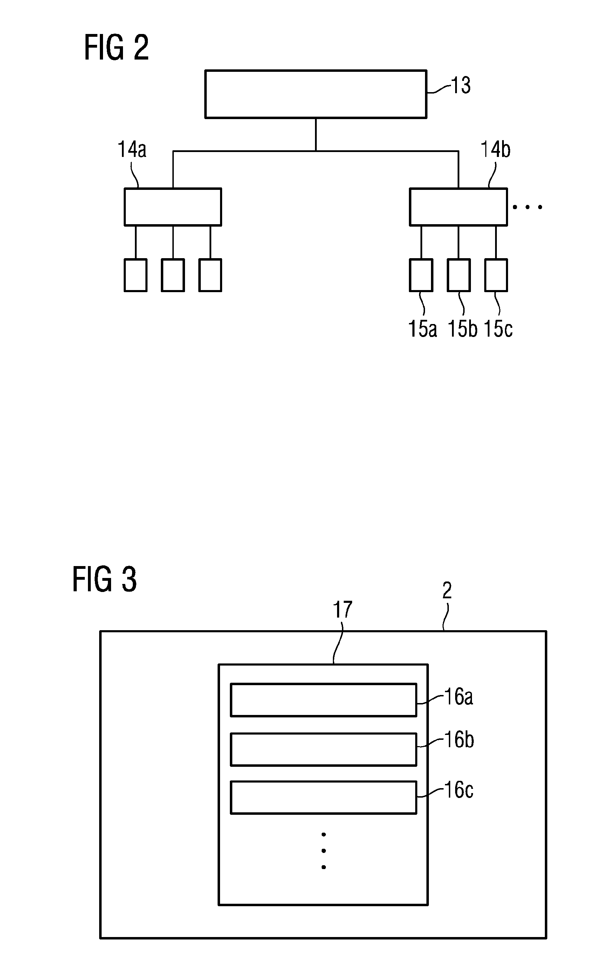

In FIG 2 ist im Rahmen des Ausführungsbeispiels ein Menübaum dargestellt. Durch Bestätigen der entsprechenden Tasten 4 kann ein Bediener der Maschine durch Aufruf von verschiedenen Menüs und Eingabemasken mittels der Tasten 4 die Maschine 8 bedienen. Innerhalb eines auf dem Bildschirm 2 dargestellten Hauptmenüs 13 kann der Bediener der Maschine verschiedene Betriebsarten der Maschine auswählen. Durch Anwahl von entsprechenden Menüs kann er die Betriebsart der Maschine auswählen. Im Rahmen des Ausführungsbeispiels kann er durch Anwahl des Menüs 14a als Betriebsart "Automatikbetrieb" oder durch Anwahl des Menüs 14b die Betriebsart "Einrichtbetrieb" auswählen. Neben den beiden oben genannten Betriebsarten kann die Maschine selbstverständlich aber auch über weitere Betriebsarten verfügen, was in FIG 2 durch Punkte angedeutet ist.

Im "Automatikbetrieb" werden von der Maschine z.B. Werkstücke bearbeitet. In dieser Betriebsart benötigt die Maschine in der Regel die maximale Energie, zur Bearbeitung des Werkstücks, da in der Regel alle oder die meisten Maschinenaktoren 7 (siehe FIG 1), wie z.B. die Antriebe zum Verfahren von Maschinenachsen, der Spindelantrieb, Hydraulikpumpen, Späneförderer und/oder Kühlmittelpumpen, aktiv sind. Den Betriebsarten sind dabei zu der jeweiligen Betriebsart zugehörige Betriebsfunktionalitäten zugeordnet, wobei in FIG 2 die Betriebsfunktionalitäten durch kleine Rechtecke dargestellt sind. Durch Drücken von entsprechenden Tasten 4 kann der Bediener z.B. die Betriebsfunktionalität "Werkstücknullpunktermittlung", welche in FIG 2 mit dem Bezugszeichen 15a versehen ist oder die Betriebsfunktionalität "Werkstücklageermittlung", welche mit dem Bezugszeichen 15b versehen ist, oder die Betriebsfunktionalität "Positionieren", welche mit dem Bezugszeichen 15c versehen ist, auswählen. Die Betriebsfunktionalität "Werkstücknullpunktermittelung" 15b dient zur Ermittlung des Werkstücknullpunkts, die Betriebsfunktionalität "Werkstücklageermittlung" dient zur Ermittlung der Werkstücklage und die Betriebsfunktionalität "Positionieren" dient zur Durchführung einer Bewegung, z.B. eines Werkzeugs, relativ zum Werkstück.

Bei Auswahl einer Betriebsfunktionalität durch den Bediener wird ihm auf dem Bildschirm 2 eine zu der jeweils ausgewählten Betriebsfunktionalität zugehörige Eingabemaske 17 (siehe FIG 3) angezeigt. Die Eingabemaske 17 weist dabei zur Eingabe von Parametern durch den Bediener zu der ausgewählten Betriebsfunktionalität zugehörige Eingabefelder 16a, 16b und 16c auf. Selbstverständlich kann eine Eingabemaske dabei noch mehr als die dargestellten drei Eingabefelder aufweisen, was in FIG 3 durch Punkte dargestellt ist. Mit den Eingabefeldern kann der Bediener die zu der jeweils ausgewählten Betriebsfunktionalität zugehörigen Parameter eingeben.

Die Einrichtung 9 ist somit zur Auswahl einer Betriebsart der Maschine 8 und einer zu der Betriebsart zugehörigen Betriebsfunktionalität der Maschine 8 durch einen Bediener ausgebildet. Weiterhin ist die Einrichtung 9 somit zur Eingabe von zu einer ausgewählten Betriebsfunktionalität zugehöriger Parameter P ausgebildet. Die ausgewählte Betriebsart der Maschine und die zu der ausgewählten Betriebsart der Maschine 8 ausgewählte zugehörige Betriebsfunktionalität der Maschine 8 und die zu der ausgewählten Betriebsfunktionalität zugehörigen durch den Bediener eingegebenen Parameter werden von der Einrichtung 9 eingelesen.

Die eingegebenen Parameter P und die ausgewählte Betriebsfunktionalität (in FIG 1 mit BF gekennzeichnet) werden als Eingangsgrößen der Auswerteeinheit 5 übermittelt (siehe FIG 1). Die Auswerteeinheit 5 ermittelt einen Energieverbrauchszustand E anhand der ausgewählten Betriebsfunktionalität BF und der Parameter P. Der Energieverbrauchszustand E ist kann dabei im Rahmen des Ausführungsbeispiels "niedrig", "mittel" oder "hoch" sein. Wählt der Bediener z.B. in der Betriebsart "Einrichtbetrieb" die Betriebsfunktionalität "Positionieren", dann wird ihm auf dem Bildschirm 2 eine entsprechende zu der Betriebsfunktionalität "Positionieren" zugehörige Eingabemaske angezeigt. Die Betriebsfunktionalität "Positionieren" dient dazu, das Werkzeug, wie z.B. einen Fräser, auf eine bestimmte Position mittels der Antriebe der Maschine zu verfahren. Der Bediener gibt nun als Parameter im Eingabefeld 16a an, auf welche Position in X-Richtung und im Eingabefeld 16b auf welche Position in Y-Richtung das Werkzeug verfahren werden soll. Weiterhin kann der Bediener z.B. im Eingabefeld 16c als Parameter eingeben, dass er die Verfahrbewegung des Werkzeugs im Eilgang durchführen möchte. Es sei hier angemerkt, dass eine Eingabe eines Parameters nicht unbedingt mittels Tastatur erfolgen muss, sondern z.B. auch durch Anklicken eines Parameters aus z.B. einer Auswahl von mehreren Parametern erfolgen kann. Dies kann tastaturgeführt oder z.B. mittels einer Computermaus erfolgen. Dadurch, dass der Bediener in der Betriebsfunktionalität "Positionieren" als Bewegungsart den Parameter "Eilgang" eingegeben hat, und somit die Bewegung des Werkzeugs schnell erfolgt, ist zu erkennen, dass der Bediener das Werkzeug ohne Werkstoffabtrag bewegen möchte. Die Maschinenaktoren 7 der Maschine, wie z.B. eine Kühlmittelpumpe oder der Späneförderer werden folglich bei der Durchführung der ausgewählten Betriebsfunktionalität mit den eingegebenen Parametern nicht benötigt.

Die Auswerteeinheit 5 ermittelt folglich den Energieverbrauchszustand "niedrig" und gibt diesen an die Ansteuereinheit 6 aus. Die Auswerteeinheit 5 ermittelt im Rahmen des Ausführungsbeispiels den Energieverbrauchzustand E aus der ausgewählten Betriebsfunktionalität und den eingegebenen Parametern P anhand einer Tabelle, in der zu jeder möglichen Betriebsfunktionalität und den zu der Betriebsfunktionalität zugehörigen möglichen Parametern der jeweilige Energieverbrauchszustand E hinterlegt ist. Falls Betriebsfunktionalität mehrfach vorhanden sind, z.B. im Einrichtbetrieb und auch in einer weiteren, in FIG 2 nicht dargestellten Betriebsart, dann erfolgt die Ermittlung eines Energieverbrauchszustands E von der Einrichtung 9, insbesondere von der Auswerteeinheit 5, anhand der ausgewählten Betriebsart, der ausgewählten Betriebsfunktionalität und der eingegebenen Parameter. Die Tabelle wird hierzu um die "Betriebsart" erweitert.

Gibt der Bediener beim Parameter "Bewegungsart" anstatt "Eilgang" z.B. "Vorschub" ein, so möchte der Bediener beispielsweise eine Kante des Werkstücks gerade fräsen. Folglich erfolgt dabei voraussichtlich ein Materialabtrag am Werkstück. Maschinenaktoren wie z.B. die Kühlmittelpumpe zum Umpumpen der Kühlflüssigkeit des Werkzeugs sowie der Späneförderer müssen hierzu eingeschaltet werden. Da voraussichtlich ein Materialabtrag am Werkstück stattfindet, benötigt der Maschinenaktor Spindelantrieb, welcher den Fräser rotierend antreibt, eine hohe Leistung, d.h. der Energiebedarf des Spindelantriebs ist relativ hoch. Die Auswerteeinheit 5 ermittelt somit den Energieverbrauchszustand E "hoch", was bedeutet, dass ein hoher Energieverbrauch zur Durchführung der mit den jeweiligen Parametern ausgewählten Betriebsfunktionalität notwendig ist.

Die Betriebsart "Werkstücklageermittlung" dient zur Ermittlung der Lage des Werkstücks. Wenn der Bediener die Betriebsfunktionalität "Werkstücklageermittlung" auswählt und in der zu der Betriebsfunktionalität "Werkstücklageermittlung" zugehörigen Eingabemaske als Parameter "manuelles Ankratzen", z.B. durch entsprechende Anwahl aus einer innerhalb einer Eingabemaske angezeigten Liste, eingegeben werden, erfolgt nur in einem sehr geringen Maße ein Werkstückabtrag mittels des Fräser. Der Spindelantrieb treibt hierbei den Fräser rotierend an und dieser wird so lange in Richtung des Werkstücks bewegt, bis ein Kontakt des Fräsers mit dem Werkstück detektiert wird. Da praktisch keiner oder allenfalls nur ein sehr geringer Materialabtrag am Werkstück stattfindet, benötigt der Spindelantrieb, welcher den Fräser rotierend antreibt, nur eine geringe Leistung, d.h. der Energiebedarf des Spindelantriebs ist nur gering und der Späneförderer ist abgeschaltet, wobei jedoch andere Maschinenaktoren 7, wie z.B. die Kühlmittelpumpe, aktiv sind, d.h. eingeschaltet, sind. Die Auswerteeinheit 5 ermittelt folglich, wenn als Betriebsfunktionalität "Werkstücklageermittlung" ausgewählt wurde und der Parameter "manuelles Ankratzen" eingegeben wurde, den Energieverbrauchszustand "mittel".

Die Energieverbrauchszustände E (im Rahmen des Ausführungsbeispiels "niedrig", "mittel" und "hoch") werden von der Auswerteeinheit 5 im Rahmen des Ausführungsbeispiels an eine Ansteuereinheit 6 als Eingangsgröße übermittelt. Die Ansteuereinheit 6 kann dabei z.B. in Form einer SPS (speicherprogrammierbare Steuerung) vorliegen. Die Auswerteeinheit 5 kann z.B. Bestandteil einer NC-Steuerung der Maschine 8 sein. Die Ansteuereinheit 6 dient zur Ansteuerung der Maschinenaktoren 7. Die Ansteuereinheit 6 steuert in Abhängigkeit des Energieverbrauchszustands E der Maschine 8 die Maschinenaktoren 7 an, was in FIG 1 durch einen Pfeil 18 dargestellt ist. Die Maschinenaktoren 7 werden dabei von der erfindungsgemäßen Einrichtung 9, insbesondere von der Ansteuereinheit 6, im Rahmen des Ausführungsbeispiels derart angesteuert, dass nur die einem bestimmten Energieverbrauchszustand E zugeordneten Maschinenaktoren eingeschaltet werden. Im Energieverbrauchszustand "hoch" werden z.B. alle Maschinenaktoren 7 eingeschaltet, während im Energieverbrauchszustand "mittel" nur ein Teil der Maschinenaktoren 7 und im Energieverbrauchszustand "niedrig" ein noch kleinerer Teil der Maschinenaktoren 7 eingeschaltet wird. So wird z.B. im Rahmen des Ausführungsbeispiels im Energieverbrauchszustand "mittel" alle Maschinenaktoren 7 außer dem Späneförderer von der Ansteuereinheit 6 angeschaltet. Dieser bleibt abgeschaltet. Im Energiezustand "niedrig" werden z.B. die Kühlmittelpumpe und der Späneförderer nicht eingeschaltet.

Um ein gezieltes Ansteuern der Maschinenaktoren 7 in Abhängigkeit vom Energieverbrauchszustand zu ermöglichen, kann die Ansteuereinheit 6 die Ansteuerung der Maschinenaktoren 7 auch zusätzlich in Abhängigkeit z.B. der ausgewählten Betriebsfunktionalität und/oder in Abhängigkeit weiterer Größen durchführen.

Im Rahmen des Ausführungsbeispiels weist die erfindungsgemäße Einrichtung 9, insbesondere die Ansteuereinheit 6, eine Projektierungsschnittstelle 12 auf, die zur Festlegung der Ansteuerung der Maschinenaktoren in Abhängigkeit des Energieverbrauchszustands E der Maschine und gegebenenfalls zusätzlich in Abhängigkeit z.B. der ausgewählten Betriebsfunktionalität und/oder in Abhängigkeit weiterer Größen ausgebildet ist. Mit Hilfe der Projektierungsschnittstelle 12 kann z.B. von einem Hersteller der Maschine festgelegt werden, wie die Ansteuerung der Maschinenaktoren in Abhängigkeit des Energieverbrauchszustands und gegebenenfalls weiterer Größen der Maschine erfolgen soll. Es kann somit z.B. festgelegt werden, welche Maschinenaktoren bei welchem Energieverbrauchszustand aktiv, d.h. eingeschaltet sind. Die Projektierungsschnittstelle kann dabei z.B. mittels einer externen Recheneinrichtung 19 (z.B. Personal Computer), d.h. einer Recheneinrichtung, die kein Bestandteil der Maschine 8 ist, projektiert werden indem in die Steuereinheit 6, mittels des externen Recheneinrichtung, 19 z.B. ein entsprechendes Programm, das die Ansteuerung der Maschinenaktoren in Abhängigkeit des Energieverbrauchszustands festlegt, integriert wird. In FIG 1 ist dies durch einen Pfeil 20 dargestellt.

## Patentansprüche

1. Einrichtung zur Reduzierung des Energieverbrauchs einer Maschine (8) aus der der Automatisierungstechnik, wobei die Einrichtung (9) derart ausgebildet ist, dass eine Betriebsart (14a,14b) der Maschine (8) und eine zu der Betriebsart (14a,14b) zugehörige Betriebsfunktionalität (15a,15b,15c) der Maschine (8) von einem Bediener auswählbar sind, wobei die Einrichtung (9) derart ausgebildet ist, dass zu einer ausgewählten Betriebsfunktionalität (15a,15b,15c) zugehörige Parameter (P) eingebbar sind, wobei die Einrichtung (9) zur Ermittelung eines Energieverbrauchszustands (E) anhand der ausgewählten Betriebsfunktionalität (15a,15b,15c) und der Parameter (P) ausgebildet ist.

2. Einrichtung nach Anspruch 1,
**dadurch gekennzeichnet, dass** die Einrichtung (9) zur Ansteuerung von Maschinenaktoren (7) in Abhängigkeit des Energieverbrauchszustands (E) der Maschine (8) ausgebildet ist.

3. Einrichtung nach Anspruch 2,
**dadurch gekennzeichnet, dass** die Einrichtung (9) eine Projektierungsschnittstelle (12) aufweist, die zur Festlegung der Ansteuerung der Maschinenaktoren (7) in Abhängigkeit des Energieverbrauchszustands (E) der Maschine (8) ausgebildet ist.

4. Einrichtung nach einem der vorhergehenden Ansprüche,
**dadurch gekennzeichnet, dass** die Maschine (8) als Werkzeugmaschine, Produktionsmaschine und/oder als Roboter ausgebildet ist.

5. Maschine aus der Automatisierungstechnik, wobei die Maschine eine Einrichtung nach einem der Ansprüche 1 bis 4 aufweist.

6. Verfahren zur Reduzierung des Energieverbrauchs einer Maschine (8) aus der Automatisierungstechnik mit folgenden Verfahrenschritten:
- Einlesen einer ausgewählten Betriebsart (14a,14b) der Maschine und einer zu der ausgewählten Betriebsart (14a,14b) der Maschine (8) ausgewählten zugehörigen Betriebsfunktionalität (15a, 15b, 15c) der Maschine (8),
- Einlesen von zu der ausgewählten Betriebsfunktionalität (15a,15b,15c) zugehörigen eingegebenen Parametern (P),
- Ermittlung eines Energieverbrauchszustands (E) anhand der ausgewählten Betriebsfunktionalität (15a,15b,15c) und der Parameter (P).

7. Computerprogramm mit Programmcode zur Durchführung des Verfahrens nach Anspruch 6, wenn das Computerprogramm auf einer Recheneinheit ausgeführt wird.
